# EUROPEAN PATENT APPLICATION

(11) **EP 4 672 096 A1**
(43) Date of publication of application: **31.12.2025**
(21) Application number: 24315309.5
(22) Date of filing: 27.06.2024
(51) Int. Cl.: G06N 10/40

(54) **SYSTEM AND METHOD FOR OUTPUTTING ELECTRO-MAGNETIC RADIATION**

(71) Applicant: Pasqal, 91300 Massy (FR)
(72) Inventor: FAVIER, Pierre, 91300 Massy (FR); NGUYEN, Catherine, 91300 Massy (FR)
(74) Representative: Slingsby Partners LLP

(57) **Abstract**

There is presented a system for outputting a plurality of electromagnetic, EM, radiation beams. The system is configured such that at least one of the EM radiation beams interacts with an atom of plurality of atoms of a neutral atom, quantum computer that is not interacted with by a second of the EM radiation beams; or, at least two of the EM radiation beams are for interacting with a respective different atom of a plurality of atoms neutral atom quantum computer. The plurality of atoms is for defining a respective plurality of qubits in a quantum computation performed by the neutral atom quantum computer. The system comprises one or more integrated-optic EM radiation source assemblies for generating at least first and second EM radiation and outputting said EM radiation along respective spatially separate output paths. The system comprises a plurality of integrated-optic EM modulator apparatus. At least a first of the integrated-optic EM modulator apparatus is for receiving the first EM radiation. At least a second of the integrated-optic EM modulator apparatus is for receiving the second EM radiation. The system comprises a plurality of output couplers. Each output coupler is for receiving, along a plane, EM radiation output from at least one of the integrated-optic modulator apparatus. Each output coupler is further for outputting the received EM radiation as an EM radiation beam in a direction either along the same plane or out of the plane.

## Description

### Field

The field of the present invention is quantum computation, in particular outputting Electro-Magnetic (EM) radiation for atoms of a neutral atom quantum computer, where the atoms act as qubits in the quantum computation.

### Background

Quantum computing has gained increasing interest over the past years and different quantum computing platforms have been developed and are under development. One such platform is neutral atom quantum computing. Neutral atom quantum computing may be performed using different computing techniques. These techniques include digital and analogue. In either computing technique a register of a plurality of atoms are typically trapped using a plurality of optical traps. These atoms are for use as qubits in the quantum computation. Once trapped, different EM radiation is then input to the atoms to provide the control signals to drive the computation. In neutral atom quantum computations, qubit entanglement is typically provided by exciting one or more atoms to a Rydberg energy level and using the Rydberg blockade to prevent neighbouring atoms to be excited to a Rydberg energy level.

Quantum computations, in particular analogue quantum computations, often require the EM radiation to vary in amplitude and/or wavelength, which in turn respectively affects the Rabi frequency and detuning of the energy levels-EM radiation interaction.

Existing ways of providing EM radiation to the qubit atoms includes generating the EM radiation from a single source and globally inputting that radiation onto all of the qubit atoms to provide the necessary energy level transitions. Where detuning is required, changing the wavelength of the globally applied EM source affects the detuning on all the qubit atoms. Furthermore, changing the wavelength of a source may be a slow process that is not fast enough for some computations. These drawbacks can be undesirable for certain computations. Furthermore, existing optical trapping apparatus, for example using a single trapping light source coupled to a spatial light modulator to generate the different areas of trapping EM radiation, generates a set of traps that can have a degree of relative trap-position control but are globally amplitude controlled to be all off or all on. This limitation also presents issues for certain quantum computations.

### Summary

In a first aspect there is presented a system for outputting a plurality of electromagnetic, EM, radiation beams. Optionally, the system is configured such that:
a) at least one of the EM radiation beams interacts with an atom of plurality of atoms of a neutral atom, quantum computer that is not interacted with by a second of the EM radiation beams; or,
b) at least two of the EM radiation beams are for interacting with a respective different atom of a plurality of atoms neutral atom quantum computer.

The plurality of atoms for defining a respective plurality of qubits in a quantum computation performed by the neutral atom quantum computer.

The system may comprise one or more integrated-optic EM radiation source assemblies for generating at least first and second EM radiation and outputting said EM radiation along respective spatially separate output paths.

The system may comprise a plurality of integrated-optic EM intensity and/or frequency modulator apparatus. At least a first of the integrated-optic EM modulator apparatus is for receiving the first EM radiation. At least a second of the integrated-optic EM modulator apparatus is for receiving the second EM radiation.

The system may comprise a plurality of output couplers. Each output coupler is for receiving, along a plane, EM radiation output from at least one of the integrated-optic modulator apparatus. Each output coupler is further for outputting the received EM radiation as an EM radiation beam in a direction either along the same plane or out of the plane.

The system may be configured such that a first of the output couplers receives the first EM radiation. The system may be configured such that a second of the output couplers is spatial separated from the first output coupler and receives the second EM radiation.

The system of the first aspect may be adapted according to any teaching herein including, but not limited to any one or more of the options for the second aspect.

There is presented, in a second aspect, a system for outputting a plurality of electromagnetic, EM, radiation beams; at least two of the EM radiation beams for interacting with a respective different atom of a plurality of atoms of neutral atom quantum computer; the plurality of atoms for defining a respective plurality of qubits in a quantum computation performed by the neutral atom quantum computer;

the system comprising:
I) a plurality of integrated-optic EM radiation sources wherein at least a first and a second of the plurality of integrated-optic EM radiation sources are for generating respective first and second EM radiation and outputting said EM radiation along respective spatially separate output paths;
II) a plurality of integrated-optic EM modulator apparatus wherein;
   at least a first of the integrated-optic EM modulator apparatus is for receiving the first EM radiation;
   at least a second of the integrated-optic EM modulator apparatus is for receiving the second EM radiation;
III) a plurality of output couplers; each output coupler for:
   A) receiving, via an integrated-optic waveguide, EM radiation output from at least one of the integrated-optic modulator apparatus; the integrated optic waveguide for guiding EM radiation about a plane;
   B) outputting the received EM radiation as an EM radiation beam in a direction out of the plane; wherein:
      a first output coupler receives the first EM radiation;
      a second output coupler, spatial separated from the first output coupler, receives the second EM radiation.

The second aspect may be adapted according to any teaching herein, including but not limited to any one or more of the following options.

Optionally, the plurality of output couplers outputs the received EM radiation as an EM radiation beam in a direction in the plane.

Optionally, the integrated-optic EM modulator apparatus comprises integrated-optic EM intensity modulator apparatus.

Optionally, the integrated-optic EM modulator apparatus comprises integrated-optic EM frequency modulator apparatus.

Optionally, the EM radiation comprises a central wavelength between 800nm and 860nm.

Optionally, the EM radiation comprises a central wavelength of any of 815nm or 850nm.

Optionally, the EM radiation comprises an energy that is non resonant with energy level transitions of the atom.

Optionally, the EM radiation sources comprise one or more light emitting diodes.

Optionally, the EM radiation source comprise one or more lasers.

Optionally, the EM radiation sources comprise a semiconductor medium for generating photons.

Optionally, the EM radiation sources comprise a waveguide.

Optionally, the EM radiation sources comprise an active waveguide comprising any of: Gallium Arsenide; indium phosphide.

Optionally, any one or more, preferably a plurality, preferably all, of the EM radiation sources are edge emitting.

Optionally, one or more of the EM radiation sources, preferably all, emit EM radiation of the same central wavelength.

Optionally, any one or more, preferably a plurality, preferably all, of the EM radiation sources form at least part of a common device.

Optionally, any one or more, preferably a plurality, preferably all, of the EM radiation sources are unitary with each other.

Optionally, any one or more, preferably a plurality, preferably all, of the EM radiation sources are co-located upon a common substrate.

Optionally, the atoms comprise alkali earth atoms.

Optionally, the atoms comprise Rubidium atoms.

Optionally, the plurality of atoms comprise the same type of atom.

Optionally, the plurality of atoms form a register of atoms for the quantum computation.

Optionally, the system comprises one or more further EM sources for outputting further EM radiation for interacting with the atoms.

Optionally, the further EM radiation comprises a different central wavelength than a central wavelength of the EM radiation.

Optionally, the further EM sources comprise at least:
a) a first set of one or more EM radiation sources for outputting a first further central wavelength;
b) a second set of one or more EM radiation sources for outputting a second further central wavelength; the first further central wavelength being different than the second further central wavelength.

Optionally, the combined energy from: a) a photon output from the first further EM source: and, b) a photon output from the second further EM source; corresponds to an energy level transition of an atom of the plurality of atoms.

Optionally, the first further EM source is an EM source from a first set of one or more further EM radiation sources for outputting a first further central wavelength.

Optionally, the second further EM source is an EM source from a second set of one or more further EM radiation sources for outputting a second further central wavelength.

Optionally, the system comprises a first integrated optic device comprising the first set of one or more further EM sources.

Optionally, the system comprises a second integrated optic device comprising the second set of one or more further EM sources.

Optionally, any of the first and second integrated optic devices are separate to the plurality of integrated-optic EM radiation sources.

Optionally, the system is configured to generate an optical trap with the EM radiation from at least one of the EM radiation sources.

Optionally, the optical trap is for trapping an atom of the plurality of atoms.

Optionally, the system is configured such that EM radiation from each EM radiation source generates a respectively different optical trap.

Optionally, the different optical traps are spatial separate from each other.

Optionally, the EM radiation from at least one of the EM radiation beams reduces the ground state energy level of the respective atom.

Optionally, the reduction of the ground state energy level acts to prevent a transition between the ground state and a higher energy state using one or more other further EM radiation beams.

Optionally, the one or more further EM radiation beams comprises at least two EM radiation beams of a different wavelength to each other.

Optionally, a first EM radiation beam of the further EM radiation beams is input into the plurality of atoms.

Optionally, a second EM radiation beams of the further EM radiation beams is input into a subset of the plurality of atoms. The subset comprising fewer atoms than the plurality of atoms.

Associated with the second aspect is presented a method for outputting a plurality of electromagnetic, EM, radiation beams; at least two of the EM radiation beams for interacting with a respective different atom of a plurality of atoms of neutral atom quantum computer; the plurality of atoms for defining a respective plurality of qubits in a quantum computation performed by the neutral atom quantum computer;
the method comprising:
A) in any order or simultaneously:
   generating first EM radiation using a first integrated-optic EM radiation source and outputting the first EM radiation along a first output path;
   generating second EM radiation using a second integrated-optic EM radiation source and outputting the second EM radiation along a second output path that is spatially separate from the first output path;
B) in any order or simultaneously:
   modulating the first EM radiation using a first integrated optic EM modulator;
   modulating the second EM radiation using a second integrated optic EM modulator;
C) in any order or simultaneously:
   i) receiving, along a plane, with a first output coupler, the modulated first EM radiation and outputting the modulated EM radiation in a direction out of the plane as a first EM radiation beam;
   ii) receiving, along a plane, with a second output coupler, the modulated second EM radiation and outputting the modulated EM radiation in a direction out of the plane as a second EM radiation beam.

The method may be adapted with any teaching herein, including but not limited to any of the options present in the first aspect and any of the following options.

Optionally, the method may further comprise:
inputting the first EM radiation beam to a first of the atoms;
inputting the second EM radiation beam to a second of the atoms; the first atom and second atom being spatially separated from each other.

According to a further aspect there is presented a system for outputting Electromagnetic, EM, radiation to a plurality of matter particles; the plurality of matter particles for representing a plurality of qubits of a quantum computer; the system comprising:
I) one or more EM sources for generating the EM radiation, the EM radiation comprising a first central wavelength;
II) a modulator forming at least part of an integrated device and configured to:
   A) receive the EM radiation generated by the one or more EM sources;
   B) change the received EM radiation to comprise a second central wavelength that is different to the first central wavelength;
the system configured to output the EM radiation comprising the second central wavelength.

The further aspect may be adapted according to teachings from any of the examples herein, including but not limited to any one or more of the following.

Optionally, the EM radiation is continuous wave EM radiation.

Optionally the EM radiation comprises monochromatic radiation.

Optionally, the first central wavelength is between 400-1200nm.

Optionally, the second central wavelength is between 400-1200nm.

Optionally, the first central wavelength is between 1000-1050nm.

Optionally, the first central wavelength is between 1012-1014nm.

Optionally, the second central wavelength is between 1000-1050nm.

Optionally, the second central wavelength is between 1012-1014nm.

Optionally, the first central wavelength is between 400-450nm.

Optionally, the second central wavelength is between 400-450nm.

Optionally, any of the EM radiation comprises a linear polarisation.

Optionally, a polarisation of EM radiation comprising the first wavelength is the same as a polarisation of EM radiation comprising the second wavelength.

Optionally, the one or more EM radiation sources comprises a plurality of EM radiation sources.

Optionally, at least two of the plurality of EM radiation sources are monolithically integrated onto a common platform.

Optionally, at least two of the plurality of EM radiation sources are non-unitary separate components.

Optionally, at least one of the EM radiation sources comprises a laser.

Optionally, at least one of the EM radiation sources comprises a circulating cavity.

Optionally, at least one of the EM radiation sources comprises a circulating optical resonator.

Optionally, at least one of the EM radiation sources comprises a ring waveguide.

Optionally, at least one of the EM radiation sources comprises a ring resonator.

Optionally, at least one of the EM radiation sources comprises a disc resonator.

Optionally, the integrated device comprises at least one of the one or more EM radiation sources.

Optionally, the system comprises at least one planar light wave circuit, PLC, to guide the EM radiation.

Optionally the integrated device comprises at least one of the said PLC's.

Optionally, the integrated device comprises a plurality of the EM sources.

Optionally, the integrated device comprises a platform for hybrid integrating one or more further components.

Optionally, the one or more further components comprises any one or more of: the modulator; one or more of the said EM sources; an optical amplifier; a nonlinear optical element for changing the wavelength of the EM radiation.

Optionally, the system comprises an optical amplifier configured to receive the EM radiation comprising a first optical intensity and output the EM radiation comprising a second intensity larger than the first intensity.

Optionally, the optical amplifier comprises a Semiconductor Optical Amplifier.

Optionally, the optical amplifier is hybrid integrated onto the integrated device.

Optionally, the modulator comprises an acoustic-optic modulator.

Optionally, the modulator is configured to change the first central wavelength to the second central wavelength using a doppler shift.

Optionally, the system comprises a nonlinear optical element for receiving the EM radiation comprising the second central wavelength and outputting the EM radiation comprising a third central wavelength that is different to the first and second central wavelengths.

Optionally the nonlinear optical element comprises a periodically poled lithium niobate, PPLN, component.

Optionally, the PPLN is phase matched to output a frequency doubled EM radiation.

Optionally, the nonlinear optical element is hybrid integrated onto the integrated device.

Optionally, the system comprises an optical amplitude modulator.

Optionally, the optical amplitude modulator is configured to: receive the EM radiation, amplitude modulate the EM radiation and output the amplitude modulated EM radiation wherein the output modulated EM radiation comprises an amplitude the same or less than an amplitude of the received EM radiation.

Optionally, the optical amplitude modulator is configured to receive the EM radiation comprising the first central wavelength.

Optionally, the optical amplitude modulator is configured to receive the EM radiation comprising the second central wavelength.

Optionally, the optical amplitude modulator is hybrid integrated onto the integrated device.

Optionally, the system comprises a spatial light modulator for receiving the EM radiation from any of: the modulator; the optical amplifier, the nonlinear element.

Optionally, the system comprises outputting EM radiation for inputting to a set of two or more of the matter particles.

Optionally, the modulator is a first modulator; the system further comprising a set of one or more further modulators; the first modulator for outputting EM radiation for inputting to a set of two or more of the matter particles; the set of one or more further modulators configured to: A) receive EM radiation from the one or more EM sources; modulate the received EM radiation; output the modulated EM radiation to a second set of one or more of the matter particles.

Optionally, the system is configured such that the EM radiation output from the first modulator is for inputting to all of the plurality of matter particles.

Optionally, the system is configured such that the EM radiation output from each of the further modulators is for inputting into a different matter particle.

Optionally, the system is configured such that the set of one or more further modulators comprises a plurality of further modulators wherein each of the plurality of further modulators outputs EM radiation for a different one of the matter particles.

Optionally, the system is configured to output a portion of the EM radiation generated by the one or more EM sources into a resonant optical cavity; the resonant optical cavity configured to output EM radiation back into the one or more EM sources.

Optionally, the resonant optical cavity is for wavelength locking the one or more EM sources.

### Brief description of the figures

Figure 1 shows an example of a system comprising two devices optically coupled together that output EM radiation to an imaging optical system;
Figure 2a shows a plan view of further example of a system comprising two devices optically coupled together;
Figure 2b shows an expanded plan view of a set of modulator apparatus of figure 2a;
Figure 2c shows an expanded plan view of an output coupler of figure 2a;
Figure 3a shows a plan view of a further example of a system using a hybrid integrated platform;
Figure 3b shows a side view of the example of figure 3a;
Figure 4 shows energy levels of atoms used in a neutral atom quantum computation;
Figure 5a shows a schematic example of a device for outputting light that is frequency and amplitude controlled;
Figure 5b shows a cross section of an example implementation of the device of figure 5a using flip chip hybrid integration;
Figure 6 shows a schematic example of a system for providing EM radiation to a plurality of matter particles;
Figure 7 shows a further schematic example of a system for providing EM radiation to a plurality of matter particles.

### Detailed description

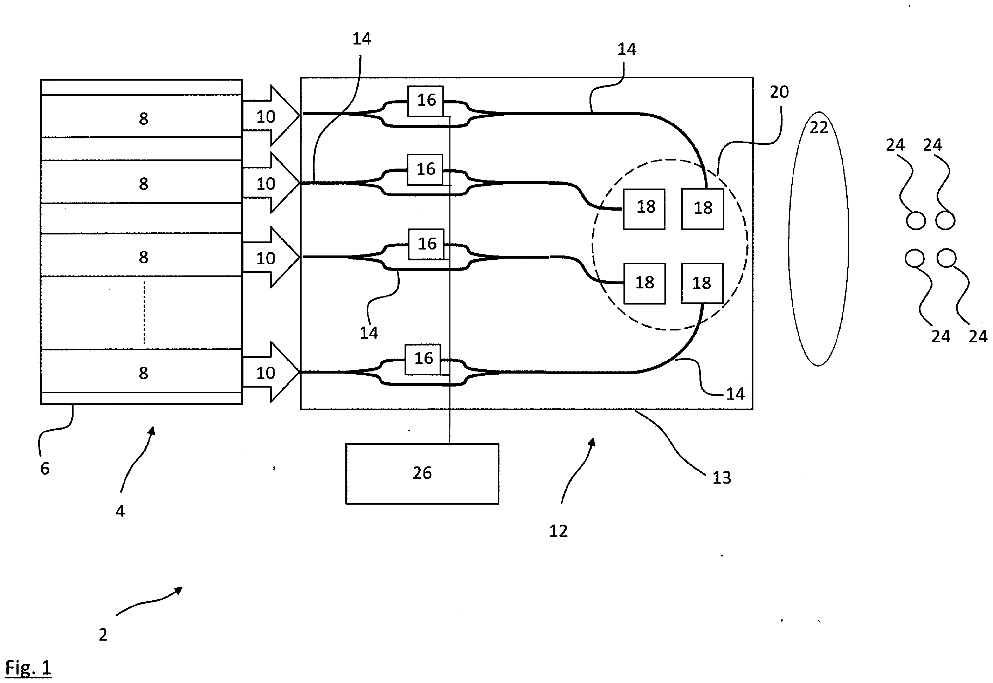

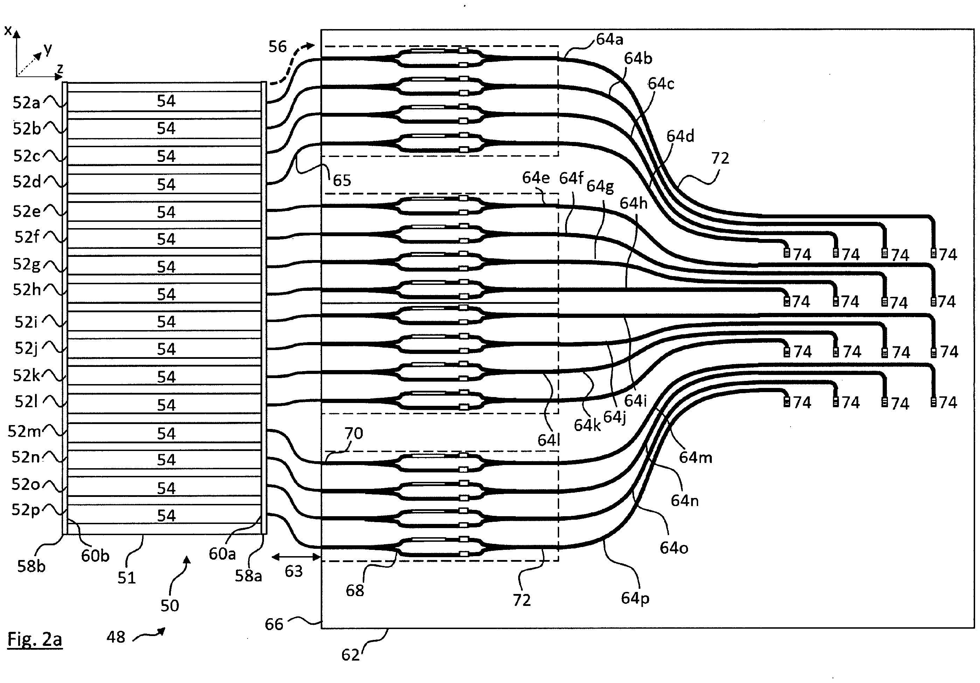

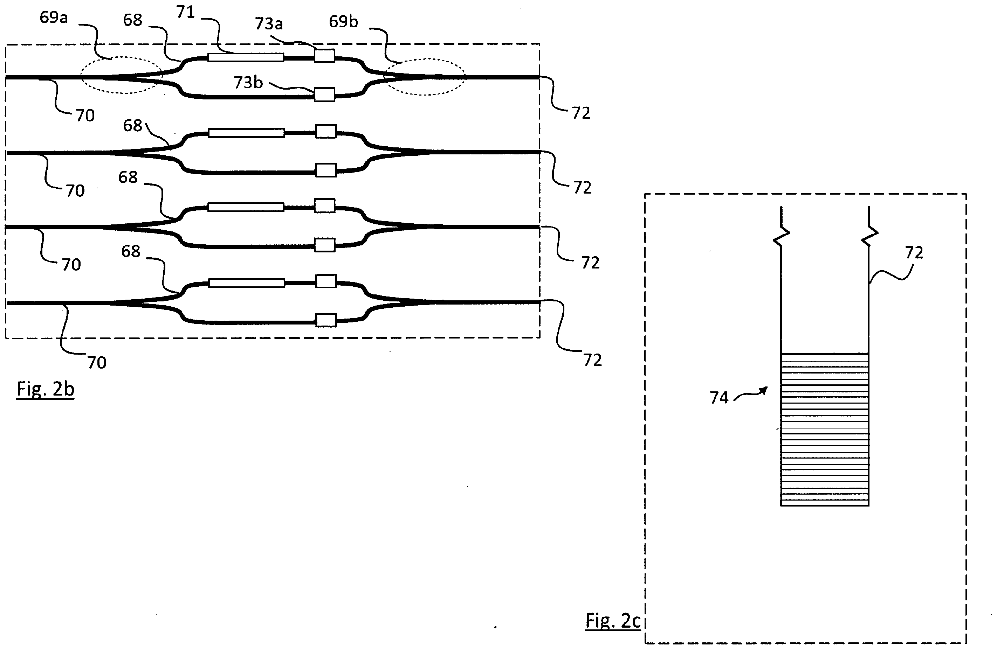

Figure 1 shows a schematic example of a system for generating EM radiation for interacting with atoms. The drawings in the figure are intended to show the principle of the system wherein the layout and size of components does not represent the size and dimensions in practice. In this example the EM radiation is for trapping neutral atoms in a sealed chamber. The neutral atoms are Rubidium and are for use in a quantum computation. Other atoms may be used, including, but not limited to caesium or another alkali metal. The system 2 for figure 1, and indeed figures 2a/b described underneath, may be provided with fewer components than shown, for example, only the first 4 and second 12 devices may be provided as the system 2. It should also be understood that the system 2 of figure 1 may be adapted with components and configurations presented for figure 2a/b and vice versa. Components and configurations of other examples may also be used with the examples in figures 1 and 2a/b.

The system 2 comprises at least a first device 4 comprising a chip 6 comprising plurality of laser sources 8 producing a plurality of spatially separate output light channels 10 from the first device 4. The first device 4 may comprise other features such as electrical components, such as chip coolers (not shown) and electrical connections (not shown). The system 2 further comprises a second device 12. The second device 12 comprises a chip 13. The second device 12 comprises: a plurality of Planar Lightwave circuits (PLCs) 14, a plurality of Electromagnetic (EM) intensity modulators 16 and a plurality of out-of-plane light coupling elements 18, all of which are integrated onto the chip 13. The second device 12 may comprise other features such as electrical components, such as chip coolers (not shown) and electrical connections (not shown). The plurality of PLCs may comprise multiple waveguide circuit wherein at least two circuits are spatially separate from each other, preferably spatially separate from each of the other PLCs. The first device 4 may be configured such that the plurality of PLCs, or a subset of the PLC's are all spatially separate from each other such that any of: a) waveguides from one PLC do not physical connect to the waveguides of another PLC; and/or b) substantially no EM radiation guided by a PLC is input into another of the PLCs.

The out-of-plane light coupling elements 18 are arranged in a 2D array 20 on the second device 12. The first device 6 and second device 12 are optically linked such that the output from each laser source is input into a separate PLC 14. Each of the plurality of PLCs 14, receives light from a different separate laser source 8, inputs the light into the one of the EM intensity modulators 16 and optically connects the output from the respective EM intensity modulator 16 into one of the elements 18 of the 2D array 20. The system 2 further comprises an optical system 22 for receiving the light output from the second device 12 via the 2D array 20. The optical system 22 focusses light output from each element 18 of the 2D array into a plurality of spots 24 wherein each spot 24 is preferably a beam waist of the beam output from a different respective element 18. Each spot corresponds to a different element 18, hence a different intensity modulator 16 and different laser source 8. The system 2 also comprises an electronic control apparatus 26 for providing electronic control signals to control the intensity modulators 16.

Figure 1 shows the first device 4 and second device 12 in plan-view. It is to be understood that the EM radiation being emitted from the array 20 is being emitted out of the plane of the figure, however figure 1 shows the optical system 22 and spots 24 adjacent the second device for conceptual reasons.

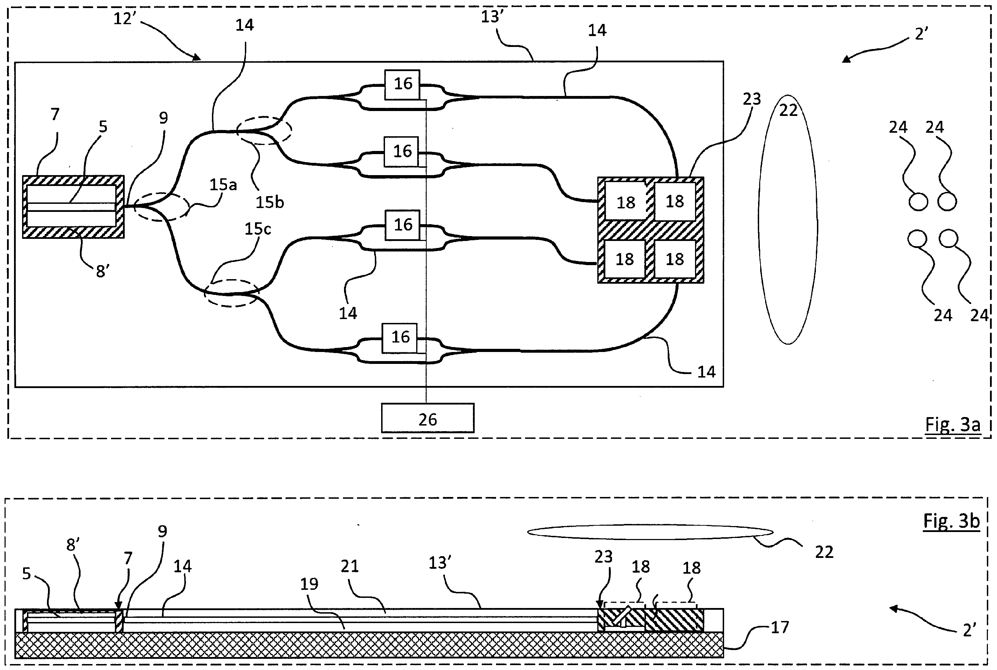

Figures 3a and 3b shows an alternative implementation, similar to figure 1 wherein like numerals between figures 1 and 3a/3b represent like components. Figures 3a/b use hybrid integration wherein a motherboard is configured to carry and support further (separately formed and constructed) devices such as laser sources 8' and output couplers 18. Figure 3a shows a plan view of the system 2' whereby only a single device 12' is used together with the optical system 22. Figure 3b shows a side view of the system 2' wherein the side view shows a cross section of the device 12'. Figure 3b only shows a single PLC waveguide 14 extending between two cavities 7, 23, wherein, in practice there would be further cross-sectional details of the PLCs and modulators 16. The system 2' of figure 3a comprises a first device 12' which is a chip 13'. The chip 13' comprises a substrate layer 17 upon which is supported an undercladding layer 19. The undercladding layer 19 in turn supports a waveguide core layer within which the PLC waveguides 14 are formed, for example by patterning and selectively etching the core layer down to the undercladding 19 to leave sections of core layer representing the PLC waveguides 14. Surrounding the top and sides of the waveguides of the PLC 14 is an overcladding layer 21. A first region 7 of the chip 13' is etched down through the overcladding 21, core and undercladding 19 layers to the top of the substrate 17. This region 7 forms a cavity extending into the chip from a top surface of the overcladding layer 21 to the substrate surface nominally contacting the undercladding layer 19. In this example, a single further EM source device 8', in the form of a chip, is located in the cavity 7 and is supported upon the exposed portion of the substrate surface within the cavity. The source device 8' in this example has a single laser source comprising a longitudinal, edge emitting, laser cavity waveguide 5 extending between two opposing reflective end facets forming part of respective opposing end facets surfaces of the chip 8'. Laser radiation exits the chip 8' from at least one, preferably one, of the end facets. The chip 8' may be termed the 'laser chip'. The laser chip 8' is electrically connected to one or more electrical power supplies that provide current for driving the laser chip 8' into population inversion. The electrical power supply and associated electrical connections are not shown in figures 3a and 3b.

The device 12' comprise a plurality of surfaces defining the cavity 7 that extend substantially directly away from the substrate layer 17 towards the plane aligned along the top surface of the overcladding 21. One of these surfaces is proximal to the edge surface of the laser chip 8' outputting laser EM radiation. A gap, such as an air gap or a gap filled with a refractive index match material, resides between: a) the laser chip end surface that emits EM radiation and, b) the proximal surface of the device 12'. Laser light propagates outwardly away from the laser chip 8' and is incident upon the proximal surface of the device 12'. An input integrated optic buried channel waveguide 9, that forms a terminal end portion of a PLC 14 has an end flush with the said proximal cavity-defining surface of the device 12'. The input waveguide 9 is formed in the core layer and is substantially rectangular in cross section. The positions of the laser chip 8' and input waveguide 9 are respectively configured such that laser light coupled out from the laser chip 8' propagates across the gap and is incident upon the input waveguide's 9 end facet such that the input waveguide 9 couples in and guides the laser light along the PLCs 14.

In the example of figures 3a/3b there is a single EM source used to provide EM radiation to a plurality of modulator apparatus 16. In this example there is a single joined PLC 14 commonly connected by the input waveguide 9, having different branches wherein each branch extends from the input waveguide 9 to a respective different modulator 16 before continuing onto optically link to a different coupling element 18. In this example each coupling element is a micro-electromechanical system (MEMs) controllable mirror device.

EM radiation received by the input waveguide 9 is guided by the waveguide core to a first waveguide splitter 15a that amplitude-divides the EM radiation into two output paths that diverge away from one another to create two spatially separate modes. The waveguide amplitude splitter 15a may comprise one or more input waveguide and at least two output waveguide channel splitter such as a directional coupler, MultiMode Interference splitter (MMI), Y branch or star coupler. Preferably the splitter comprises one input waveguide and multiple output waveguide, which for figure 3a is two output waveguides. Each output path is then input into a respective further amplitude dividing splitter 15b/c, similar to the first splitter 15a. The output from the two splitters 15b/c are four spatially separate waveguides carrying approximately 25% of the input light received by waveguide 9, (assuming no propagation losses along the PLC 14).

In an alternative arrangement the set of splitters 15a,b,c may be replaced by a single amplitude splitting waveguide component, for example a 1xN splitter of a MxN splitter wherein N is the number of output waveguides and M is the number of input waveguides. Examples of such splitters include MMI and star couplers, for example a 1x4 MMI splitter. The above examples of types and numbers of splitters may be used with any example herein.

The waveguide 9, splitters 15a-c and other waveguides forming the PLC are physically connected together with a continuous portion of the waveguide core material. Each output waveguide is connected to the input waveguide of a Mach-Zehnder Interferometer (MZI). Each MZI has a modulator 16 in at least one interferometer arm. Each of the output waveguides of the MZI runs continuously, carrying the EM radiation along that PLC branch, towards a further cavity 23. The further cavity 23 is similar to, but physically separated from, the first cavity 7 accommodating the laser chip 8'.

Instead of the laser chip 8', the further cavity 23 accommodates the output coupling elements 18. Each PLC branch has a portion extending from its respective MZI to a surface that defines a side of the further cavity 23. Similarly to the first cavity 7, the further cavity 23 is defined by a substrate surface and a plurality of surfaces extending away from the substrate that are joined together at their respective edges. The in-plan shape of the further 23 (and first 7) cavity is rectangular but may be any shape. The waveguides of each PLC branch extending from the MZI terminate at a further cavity 23 defining surface such that EM radiation carried by the waveguide propagates outwardly from the end output facet of the waveguide, and corresponding cavity-defining surface, towards a different respective MEMs. The EM radiation propagates through a gap between the MEMs and terminal facet of the waveguide and is incident upon the MEMs. The MEMs is controlled using an electrical data signal (not shown in the figures). Each MEMs comprises a base in contact with the substrate surface defining the floor of the further cavity 23 and a pillar extending outwardly away from the base and substrate. The pillar terminates with a pivot coupling mechanism allowing a planar mirror (or other type of mirror), connected to the pillar, to move relative to the pivot coupling. The light output from the waveguide is incident upon the mirror of the MEMs and is reflected in a direction out of plane from the direction of propagation of the light along the PLC. Controlling the MEMs includes changing the orientation of the planar mirror about the pivot to reflect and divert the EM radiation in different directions. Figure 3b shows details of one of the MEMs, however the other MEMS would have the same or similar structure. The MEMS or laser chip may be secured within the respective cavity in a fixed position using any suitable technique, for example using an epoxy resin.

It is to be noted the following possible variations of the example shown in figures 3a/b. Any of the features described for figures 3a/b may be used in other examples, such as, but not limited to any of: the waveguides, the chip design, cavity design, the integration of the different components and the component design and structure. Any of the following may be adapted: the substrate material type; the substrate material thickness; the undercladding material type and thickness; the waveguide core material type and thickness; the overcladding material type and thickness; the integrated optic cross section; the PLC design; the size and shape of any of the cavities; the type of output coupling elements 18.

Turning back to the example of figure 1. Figure 2a shows a more detailed example similar to figure 1 and shows a system 48 wherein the optical system 22, spots 24 and electronic control apparatus 26 are not shown. The first device 50 in figure 2 comprises sixteen edge emitting lasers 52a-p monolithically integrated onto the same chip 51. The substrate of the chip 51 is Gallium Arsenide, GaAs, wherein each laser 52a-p has an edge emitting double heterostructure design that uses triple GaAs quantum well structures in an AlGaAs waveguide active region 54. Other laser designs are possible within the same or a different material system.

Each laser 52a-p has substantially the same structure and materials so that each laser 52a-p is substantially identical. Each laser 52a-p is individually controllable by one or more electrical signals and outputs continuous wave laser light 56, with a central wavelength of 850nm, at an output facet edge 58a of the chip 51. Each laser 52a-p outputs its respective light at a different position along a common chip surface 58a to all the other lasers 52a-p. The lasers 52a-p are formed in a linear, equally spaced, planar parallel array on the chip 51.

Each end 60a, 60b of the active waveguide 54 is terminated by a coated chip edge 58a, 58b wherein the coating of a first edge 58b is 100% reflective at 850nm whilst the coating at the opposing edge 58a or 'output edge' is 99% reflective at 850nm. The remaining 1% of light output by the output edge 58a is the laser light output from the laser 52a-p. Other reflectivity values are possible that allow at least one facet, preferably one facet to output a portion of EM radiation, preferably less than 25%, preferably less than 5%. Other reflective elements may be used instead of the facet reflective coatings, such as Bragg gratings. The active waveguide 54 residing in a laser cavity extends in a principal direction parallel to the main plane of the chip 51 wherein the principal direction is along the direction of propagation of light within the laser cavity. Electrical connections (not shown) are made using wire bonds to provide electrical current to each laser to induce a population inversion.

A second chip 62 is also included and comprises sixteen Planar Lightwave circuits (PLC) 64a-p. Each PLC 64a-p comprises a core waveguide path that interfaces with, and receives light from, a different position along a common side surface 66 of the chip 62. The gap 63 between output surface 58a and the common side surface 66 is optically bridged by using an optical bond 65 respectively between each EM source 54 output and each corresponding input waveguide 70 of the plurality of PLCs 64a-p. The optical bond 65 is a solid wire of material such as glass or polymer that is substantially transparent at the wavelength of the EM radiation from sources 54. Each optical wire physically connects and optically links the first chip 51 at an EM radiation output facet to the second chip 62 at a PLC input waveguide facet and acts to guide light from one source to one PLC. In this example there are sixteen optical wires 65. Other optical coupling mechanisms may be used to transfer EM radiation from a source 54 to a PLC 64a-p, including using optical fibres that may use micro lenses to focus and collect light from to/from the respective facets.

The second chip 62 may be formed from any suitable material system of one or more, preferably a plurality, of different materials, that are solid at room temperature. At least a waveguide core material, preferably a waveguide cladding as well, are at least partially transparent to the EM radiation output from chip 51, thus, to allow for propagation of EM radiation along different PLCs 64a-p. The materials used for the core and cladding of waveguides on the chip 62 may be the same for different waveguide components or different for different waveguide components. For example, sections of passive waveguide in a PLC may be formed from one material but active waveguide sections (for example modulator sections of the PLC) may be formed from other materials. Materials suitable for performing active functions such as modulation or optical amplification may include, but are not limited to, any of: direct or indirect bandgap semiconductors; Lithium niobate (LiNbO₃); Gallium Arsenide and variants thereof such as InGaAs or InGaAsP. Passive waveguide materials may include, but are not limited to, materials such as: silica or silicon or silicon nitride or doped variants thereof; polymer; lithium niobate. Any of the material for active waveguides may be used in passive waveguide sections as well. In this particular example the waveguides used for both the active and passive waveguiding functionality are formed from lithium niobate. The waveguides used on device 62 are buried channel rib waveguides wherein a common silicon planar substrate is used to form and locate all the waveguides upon. A silicon dioxide undercladding layer is deposited upon one major planar surface (or both) of the silicon. A layer of lithium niobate is then deposited on top, patterned and partially etched down towards the silicon dioxide layer to leave an undulating layer of lithium niobate wherein raised 'rib' portions may support guided modes, hence form the waveguide cores. A further 'overcladding' layer of silicon dioxide is then deposited onto the exposed top of the lithium niobate layer to bury the waveguides. Further metallic layers, such as gold, are then deposited on the exposed top overcladding surface to provide the necessary electrodes for the active portions of the waveguides where current injection is required to change local physical properties of the lithium niobate waveguide cores. It is noted that other types of waveguide design including non-buried rib or ridge waveguides may be used.

Where different waveguide materials are used for a PLC 64a-p, integration techniques may be utilised to form the chip 62, for example hybrid integration. An example of integration may be to form active waveguide sections on one or a plurality of separate chips and integrate the separate chips onto the chip 62 wherein chip 62 comprises passive waveguide sections. An example of integration may that discussed with respect to figures 3a/3b.

Another type of integration that may be used may be flip-chip integration wherein the separate chip is mounted and fixed to a further substrate to form a daughterboard assembly. A recess in the main chip 62 (or 'motherboard') is formed similar to the example in figures 3a/b wherein waveguides of the motherboard typically terminate at side walls that define the recess. The daughterboard assembly is flip-chipped onto the motherboard such that the separate chip formed from the active material hangs from the further substrate and extends into the motherboard recess. The surface of the further substrate that the separate "active" chip is fixed to comprises an exposed area that the separate chip is not adjacently facing. This exposed surface portion contacts the motherboard, for example in figure 3a/3b, a daughterboard assembly flip-chipped into a recess would have its exposed surface contact the overcladding 21 surface furthest away from the substrate 17. Optionally, one or more alignment stops, for example formed by a solid polymer may be formed on top of this top surface of the motherboard, wherein the side walls of the substrate of the daughterboard assembly contact the alignment stop side walls. Other active or passive optical alignment techniques such as, solder bump self-alignment or active alignment by monitoring received optical output powers from the PLC may be used.

Turning back to figure 2a and the chip 62. Each PLC 64a-p comprises an input waveguide 70 interfacing a common input edge 66 of the chip and runs continuously to guide the input light into a Mach Zehnder (MZI) modulator 68. Each MZI 68 comprises a first multi-mode interference coupler (MMI) 69a that has a single input waveguide and two output waveguides. A multi-input port MMI may be used in the alternative wherein one waveguide is joined to the input waveguide 70 receiving light from the chip edge 66, whilst the other input waveguides are terminated within the chip 62. The MMI 69a is designed to split 50% of the incoming light into a first output waveguide forming a first interferometer arm, and 50% into a second output waveguide forming a second interferometer arm. The first and second waveguide arms run continuously and become two input waveguides of a second MMI 69b wherein the optical path length of the first arm and second arm between the two MMls are equal. The second MMI 69b comprises two input waveguides and one output waveguide 72. In the alternative, the second MMI 69b may have one or more, for example two, spatially separate output waveguides wherein extra waveguides are terminated in the chip whist one output waveguide 72 runs continuously to join and input light into a grating coupler 74. It is noted that other modulator types may be used, for example electro-absorption amplitude modulators.

Figure 2a shows four blocks of four MZls wherein each block of four MZls is identified in the figure with a dashed line box. Each set of four MZls corresponds to four PLCs 64a-p that input EM radiation into a single row of four output couplers 74. Figure 2B shows an example of a set of four MZls in expanded view.

In the example of figure 2a, there are sixteen MZls 68 and sixteen grating couplers 74. Each grating coupler 74 receiving light from a different one of the MMI's, via a continuous passive waveguide physically connecting the MZI to the grating coupler 74. The grating coupler thus forms part of a PLC 64a-p.

For each MZI 68, The first arm contains a first section 73a designed to be thermo-optically tuneable to controllably change the phase of light propagating along the first arm, and a second section 71 comprising an electro-optic modulator for controllably changing the phase of light propagating along the first arm. The second arm contains a section 73b designed to be thermo-optically tuneable to controllably change the phase of light propagating along the second arm. In this example the active and passive waveguides of the device 62 are formed of a lithium niobate waveguide core material, wherein the active sections of waveguides are adjacent to electrodes or heating elements that when electrical current signals are applied, change the refractive index of the local waveguide materials to change the phase of EM radiation passing through.

Each grating coupler 74 is configured to receive light from an output waveguide of its respective MMI and redirect the light from in-plane with the chip to out of plane from the chip.

The sixteen grating couplers are arranged about the major plane of the chip in a square 4x4 grid wherein each grating coupler is spaced apart from each other grating coupler and each grating coupler is spaced apart from each of its adjacent grating couplers by the same distance, which in this example is 20 micrometres. The EM radiation output from each grating coupler preferably is directed 90 degrees out of the plane of the waveguides and are incident upon an optical system of one or more lenses and/or mirrors that direct and focus the EM radiation into spatially separate regions of EM radiation for interacting with a different qubit atom.

Figure 2c shows an exploded view of a grating coupler 74 at the terminal end of a waveguide 72. The grating coupler comprises a surface undulation of a top surface of the waveguide 72 (that faces away from the undercladding). The undulation may have any longitudinal cross section with a constant period crest-crest pitch. The undulation may be square wave like or sinusoidal. An example of the grating coupler is one having a crest-crest pitch of one micron and thirteen teeth, however other pitches and number of teeth may be used such as 0.5-0.15 micrometre pitch and 10-20 teeth.

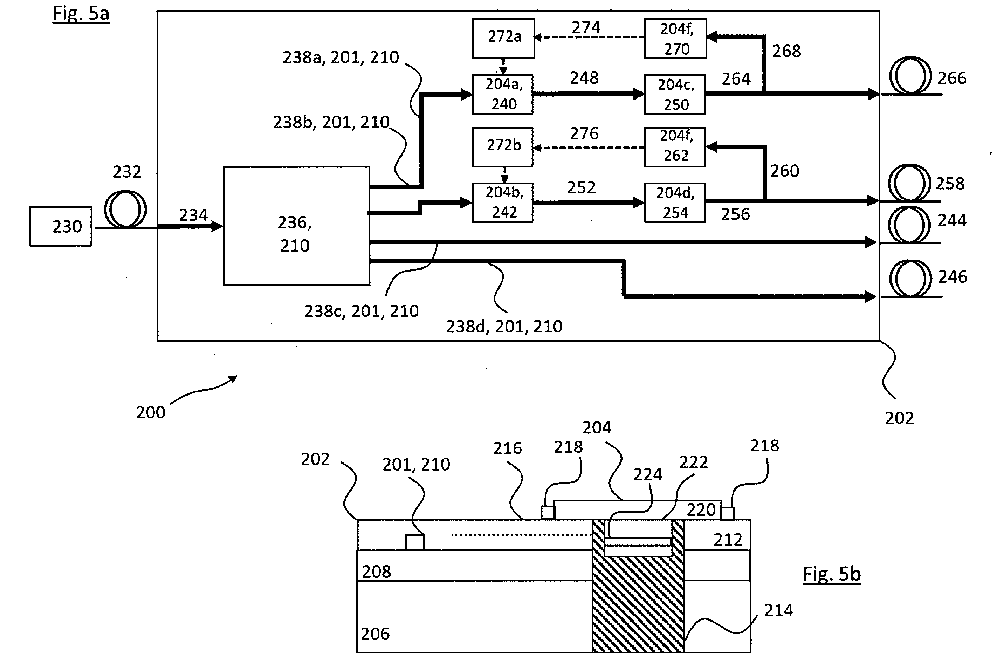

The system may include (but not shown) a component for changing the wavelength of the EM radiation into to the grating coupler. Such a component may be a frequency modulator monolithically or hybrid integrated onto the device 62. An example of integrating such a component is shown in figure 5a. Changing the wavelength of the EM radiation input to the output coupler may change the angle at which the EM radiation is output from the grating coupler.

Each of the 16 grating couplers 74 output radiation for inputting into a respective different qubit-atom. Thus, the system provides the ability of independently control the amount of EM radiation a particular atom receives. This may be used for a variety of reasons, such as trapping and/or detuning, as discussed below.

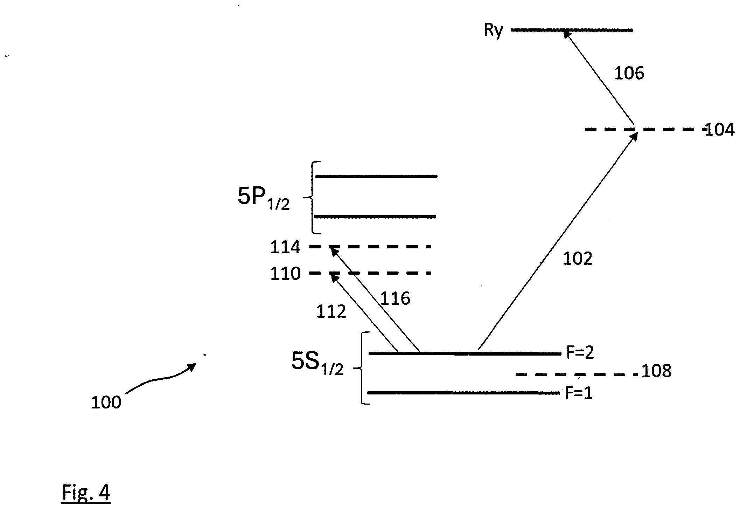

Figure 4 shows some of the energy levels of Rubidium-87, which is a type of atom that may be used to represent qubits in a quantum computation discussed herein. The 5S_{1/2} to 5P_{1/2} transition corresponds to the D1 transition and not all the hyperfine sub-levels are shown in the figure. Quantum computations are preferably neutral atom quantum computations that may be digital or analogue. The quantum computation typically establishes a 'register' of atoms that are going to represent qubits in a quantum computation. Analogue quantum computations include inputting required EM radiation to embed a desired Hamiltonian operator to the register of atoms. Other types of atoms, hence energy levels and EM sources to excite atoms between energy levels may be used in the quantum computation.

In quantum computations using the Rydberg energy levels, atoms may be promoted to the Rydberg level for different reasons. One reason could be to use the Rydberg blockade in the quantum computation wherein the measured qubit states are two non-Rydberg energy levels. Another reason is where one or more of the measured qubit states is a Rydberg energy state. Figure 4 depicts energy levels wherein the ground state 5S_{1/2} has 4 sub-energy levels, two for F=1 and two for F=2 wherein only one of each is represented in the figure. Another of the atomic energy levels is 5P_{1/2}. The 5P_{1/2} has a plurality of sub energy levels, each corresponding to a different value of F, however two of these sub energy levels are shown in the figure. One of the Ryberg energy levels 'Ry' is also shown in the figure.

To promote an atom from the F=2 ground state to the Rydberg energy level Ry, a two-photon transition is nominally used with: a first photon 102 promoting the atom from the ground state to an intermediate non-resonant state 104; a second photon 106 promoting the atom from the intermediate state 104 to the Rydberg state Ry. In this example the wavelength of photon 102 is 420nm whilst the wavelength of photon 106 is 1013nm. Such EM radiation typically originations from separate sources such that each wavelength of EM radiation originates from its own EM source, or set of EM sources. Often, such EM sources are part of an optical system that generates the EM radiation, directs and focusses the EM radiation onto the atoms of interest. Some EM radiation may be globally applied to a plurality of atoms, for example all the atoms. Some EM radiation may be locally input to only a subset of one or more of the plurality of atoms.

When quantum computations are being undertaken, it is typical to need to change the state of certain atoms or ensure that these certain atoms do not make a transition to a higher energy level, such as a Rydberg state. Different methods of exciting certain atoms to a Rydberg state from a lower energy state (such as a ground state) may be used. For example, using the two-photon transition in figure 4, one of the beams of EM radiation, for example with photons 106 may be input 'globally' onto all the atoms in the register. This EM radiation, by itself, does not promote the atoms to any higher-level energy states. When one or more atoms of the register are desired to be promoted to the Rydberg state, one or more local addressing beams at the other of the EM radiation wavelengths (for example with photon 102) are used to locally input EM radiation onto only those particular atoms to enable that subset of atoms to be promoted to the Rydberg state.

Quantum computations may require different degrees of wavelength detuning. Such detuning may need to happen during a computation, for example during an analogue quantum computation. Taking the above example, wavelength detuning of the two-photon Rydberg transition using photons 102 and 106 may be accomplished by changing the wavelength of one or both of the EM beams outputting the different wavelengths photons 102, 106. Sometimes the requirement to change the wavelength may be fast, in that a fast change in wavelength is required in the computation. This can be difficult to achieve for the speeds required for the sources of the radiation 102, 106.

Another option realised by the inventors is to use a further source of EM radiation. This further source of EM radiation is preferably non-resonant in that it does not promote atoms between two different energy levels. When this further source of EM radiation is incident upon the atoms, it acts to effectively reduce the ground state energy level, hence providing the required detuning. In figure 4 this is shown as either providing an 850nm beam of EM radiation or a 815nm beam of EM radiation (or both). The new 5S_{1/2} ground energy level is shown as level 108. If an atom has its ground level pushed down with this extra EM radiation, then the normal resonant two-photon transition from the ground F=2 level to the Rydberg level becomes shifted off from resonance. In figure 4, two non-resonant energy levels are shown for the EM radiation 112, 116: one energy level 110 for the further EM radiation 112 being at 850nm; the other energy level 114 for the further EM radiation 116 being at 815nm.

Typically, this extra EM radiation beam, for example EM radiation for wavelength 112 or 116, is incident upon the atoms whilst one or more of the other radiation beams 102, 106 are also incident upon the atoms. The extra EM radiation 112, 116 may be globally used to address all the atoms or may be used to target only certain atoms that require detuning.

The systems of figures 1 and 2a provide examples of devices that can generate individually controllable beams of EM radiation for these further wavelengths 112, 116. The same devices may be adapted for other wavelengths.

For example, in figure 2a each output coupler 74 is used to output EM radiation to an optical imaging system 22 for addressing a different qubit atom in the register. The EM radiation for each output coupler 78 is generated by a separate EM source 54 and can be independently amplitude modulated using the MZI modulator the EM radiation respectively goes through. The EM radiation output by an output coupler 74 may be referred to as a 'channel' or 'qubit channel' in that the EM radiation in the channel may only incident upon a single qubit. In an alternative, a channel may cover a subset of two or more qubits. The system presented herein thus allows for individual qubit detuning control.

The same EM radiation output from the output couplers 74 may also be used, together with imaging optics 22 to generate optical traps for holding (trapping) the qubit atoms during the quantum computation. In some quantum computations the trapping EM radiation is usually turned off whilst the addressing EM radiation 102, 106 is input to the atoms to facilitate the energy level transitions. Because the quantum computation is typically fast, the atom does not have enough time to move away from the trapping site position (whilst the trapping radiation is 'off') before the addressing EM radiation 102, 106 is turned off and the trapping EM radiation is turned on again. By having a further source of EM radiation 112, 116 that can be used for both trapping the atoms and detuning, the present system allows for certain traps to be kept on whilst the quantum computation takes place. This would allow for independent controllability of atom detuning whilst the EM beams input radiation at the normal two photon transition excitation method. Existing optical trapping apparatus may not be able to individually turn one trap on or off without also turning on/off the other traps. The system presented herein therefore also provides independent trap controllability. The modulation of the EM radiation 112, 116 may be implemented by directly varying the electrical current to the EM sources 54, and/or via the MZI amplitude modulator for that particular channel. Typically, an external modulator provides faster modulation, with less chirp that directly modulated EM sources.

The sources for the EM radiation used to transition atoms from ground to Rydberg may be any suitable EM source able to emit the desired wavelengths. For example, a 420nm laser diode or LED may be used for the 420nm radiation. Alternatively, a frequency doubled 840nm beam using periodically poled lithium niobate (PPLN) may be used wherein 840nm wavelength EM radiation is incident upon a PPLN crystal oriented to phase match the 2^{nd} harmonic generated 420nm photons into a constructively interfered beam that is output and filtered to remove the original 840nm wavelength radiation.

Figure 5a shows an example of a device 200 for use with the system in figure 2a in place of the first and second devices of figure 2a. The device of figure 5a comprises buried channel integrated optic waveguide circuity 201 using a silicon nitride (Si₃N₄) waveguide core material surrounded by a silicon dioxide SiO₂ undercladding 208 and overcladding 212. The term 'motherboard waveguide' may be used to refer to a waveguide formed in this manner. Unlike in the example of figure 2a, this example uses hybrid integration using flip-chip technology wherein a motherboard 202 acts as a platform to flip-chip integrate multiple daughterboards 204. Figure 5b shows a cross section of an example of the device 200. The cross section of figure 5b is not intended to represent actual relative positions of the flip-chip daughterboard 204 compared to the waveguides 201 of the motherboard 202.

The motherboard 202 comprises a silicon substrate 206, upon a major planar surface is a 15 micrometre undercladding layer 208 of silicon dioxide grown into the silicon using thermal oxidation. A waveguide core material 210 is deposited as a layer and then patterned and etched using standard lithographic and etching processes to leave on the waveguide core portions 201 of the PLCs of the motherboard 202. A further layer of silicon dioxide overcladding 212 is then deposited on top of the silicon nitride core 201 and exposed top surface of the undercladding 208 to bury the waveguide core 201. Through holes 214, extending between the exposed major planar top surface 216 and the exposed surface of the substrate 206 facing away from the undercladding layer 208 are formed by either machining or etched. The through holes 214 are formed where daughterboards are intended to be flipped chipped. Upon the overcladding top surface 216 are deposited polymer stops 218 to laterally align the substrate 220 of the daughterboard 204. The daughterboard 204, otherwise known as a daughterboard assembly, comprises a substrate 220 of silicon upon which is mounted the component 222 (for example a device such as a lithium niobate modulator or another component). The component 222 is typically an active component that is controlled using one or more electrical signals from an electrical source (not shown). In this example the component comprises a waveguide 224 running longitudinally about a plane parallel to the plane that the waveguide 201 of the motherboard longitudinally runs along. The vertical alignment of the motherboard waveguide(s) 201 and the component waveguides is set by the depth of the overcladding layer 212 and the height of the component waveguide 224 from the surface of the daughterboard substrate 220 contacting the top surface 216 of the overcladding layer. Index matching gel or fluid may be inserted in the gap(s) in the through hole between the through hole side walls having the waveguide 201 end facets and the portions of the component 224 comprising the waveguide 224 output end facets. The procedure to flip-chip may be similar to existing techniques in the art including other descriptions of flip chipping herein. Furthermore, other integration techniques may be used to hybrid integrate the different parts of this overall device 200 in figure 5a.

Turning back to figure 5a. The components, optical waveguide circuitry and electrical circuitry are shown in schematic form in figure 5a. The thicker black solid arrow-headed lines represent waveguides whilst the thinner dashed arrow-headed lines represent electrical connections between components, for example wire bonds or metallic electrical tracks running within the motherboard or and/or on top of the overcladding top surface 216. It is to be understood that standard electrical and optical design would be employed to implement the features of the device 202 in a functional working manner.

An external source 230 of 1013nm continuous wave EM radiation is optically coupled by a single mode optical fibre 232 into a first input waveguide 234 of the motherboard 202. The source may be any suitable source such as a fibre or semiconductor laser, but in this example the source is an InGaAs based laser. A single input waveguide channel to four output waveguide channel star coupler 236 is formed in the waveguide layer 210 of the motherboard 202. Preferably the star coupler 236 may adjust the amplitude splitting ratios between its four output ports via the input of one or more electrical control signals. Such control may be manifested by forming one or more thermo-optic heaters on top of the overcladding layer that, when electrical current is applied, heat the underlying regions of cladding and waveguide core 210 to provide a different refractive index. In turn this local change in refractive index in the star coupler slab region may change the amplitudes of EM radiation output from some or all of the output waveguides. The star coupler 236 may be designed to nominally have substantially 25% of the EM radiation input along waveguide 234 output along each of its four output waveguides.

A first of the star coupler output waveguides 238a continues along the major plane of the motherboard to input light into a motherboard recess 214 (not shown in figure 5a). A first Semiconductor Optical Amplifier (SOA) 240 is located on a substrate 220 to form a first daughterboard assembly 204a which is flip chipped into the recess 214 and optically aligned with the terminal end of the output waveguide 238a that has an output facet flush with a side wall of the through hole 214 proximal to the input waveguide facet of the SOA 240. EM radiation from the waveguide 238a is coupled into the SOA input waveguide 240.

A second of the star coupler output waveguides 238b continues along the major plane of the motherboard to input light into a motherboard recess 214 (not shown in figure 5a). A second Semiconductor Optical Amplifier (SOA) 242 is located on a substrate 220 to form a second daughterboard assembly 204b which is flip chipped into the recess 214 and optically aligned with the terminal end of the output waveguide 238b that has an output facet flush with a side wall of the through hole 214 proximal to the input waveguide facet of the SOA 242. EM radiation from the waveguide 238b is coupled into the SOA input waveguide 242.

A third of the star coupler output waveguides 238c continues along the major plane of the motherboard to output light from the motherboard into an optical fibre 244. A fourth of the star coupler output waveguides 238d continues along the major plane of the motherboard to output light from the motherboard into an optical fibre 246.

The SOAs in this example are formed from an InGaAs material system and are electrically driven with electrical current via electrical connections to respective current sources. Changing the current to the SOA changes the gain, hence optical amplitude of the light output from the SOA. Thus, each SOA may be used as a controllable amplitude modulator. The amplified light output from SOA 240 is coupled into motherboard waveguide 248, which in turn inputs the light into a 1013nm frequency modulator 250 formed on a third daughterboard assembly 204c similar to the other daughterboard assemblies. The amplified light output from SOA 242 is coupled into motherboard waveguide 252, which in turn inputs the light into a 1013nm frequency modulator 254 formed on a fourth daughterboard assembly 204d similar to the other daughterboard assemblies. Each of the frequency modulators 250, 254 comprises a single, straight, lithium niobate waveguide mounted onto a substrate 220. Electrodes about the lithium niobate waveguide are electrically driven to controllably change the refractive index of the waveguide resulting in the output light being wavelength shifted by plus or minus 15MHz.

The output frequency modulated light from the lithium niobate frequency modulator 250 is output into a further waveguide 264 which guides the light to an output facet of the motherboard 202 wherein the light is coupled out into a further optical fibre 266. A portion (for example, between 1%-25%, preferably 5%-10%) of the light is coupled out of waveguide 264, prior to being coupled into the optical fibre 258, into a further motherboard waveguide 268 by a motherboard waveguide splitter. The further motherboard waveguide 268 couples light onto a first photodiode 270 that is mounted onto a substrate 220 to form a fifth daughterboard assembly 204e that is hybrid integrated in a similar manner as discussed previously.

The output frequency modulated light from the lithium niobate frequency modulator 254 is output into a further waveguide 256 which guides the light to an output facet of the motherboard 202 wherein the light is coupled out into a further optical fibre 258. A portion (for example, between 1%-25%, preferably 5%-10%) of the light is coupled out of waveguide 256, prior to being coupled into the optical fibre 258, into a further motherboard waveguide 260 by a motherboard waveguide splitter. The further motherboard waveguide 260 couples light onto a second photodiode 262 that is mounted onto a substrate 220 to form a sixth daughterboard assembly 204f that is hybrid integrated in a similar manner as discussed previously.

Upon the motherboard are formed separate control electronic assemblies 272a, 272b, one for each of the SOAs 240, 242.

An electrical connection 274 is formed between photodiode 270 and control electronic assembly 272a. Upon detecting light output from waveguide 268, photodiode 270 generates electrical photocurrent that is output to assembly 272a. The magnitude of the photocurrent is used by the electronics assembly 272a to adjustably control the current into SOA 240 to regulate the optical output intensity along motherboard waveguide 248.

An electrical connection 276 is formed between photodiode 262 and control electronic assembly 272b. Upon detecting light output from waveguide 260, photodiode 262 generates electrical photocurrent that is output to assembly 272b. The magnitude of the photocurrent is used by the electronics assembly 272b to adjustably control the current into SOA 242 to regulate the optical output intensity along motherboard waveguide 252.

The light output from the first and second star coupler waveguides 238a, 238b is therefore output from the motherboard having the amplitude and frequency adjustable and controllable.

The star coupler 236 may be inherently designed or may be controllable tuned to output a larger portion of light into the output waveguides 238a/b.

The light output from each of the fibre 266 and 258 may have its wavelength and amplitude controlled independently of the other optical outputs of the motherboard. One of the output optical channels having amplitude and frequency control, for example along fibre 266, may be input into a further optical amplifier and used in a quantum computation, for example for globally addressing all atoms, acting as qubits, in the computation. The other of the output optical channels having amplitude and frequency control, for example along fibre 258, may be used to input light into one or a subset of the atoms used as qubits in a quantum computation. The device 200 may therefore be used to provide light at a particular wavelength for both global and local addressing of qubits. Local addressing, as discussed elsewhere herein may be used to provide detuning of particular qubits and/or form part of a multi-photon transition from a lower to upper energy level, for example a two-photon transition from a ground to a Rydberg state. Optionally, further optical channels for local addressing may be formed on the same device 200. For example, the star coupler 236 may have more than four output waveguides wherein a plurality of the output waveguides are used to guide a portion of the light for locally addressing a respective different one or set of qubit atoms. Such variations to figure 5a may include further daughterboard assemblies, for example a separate SOA and frequency modulator per separate star coupler output waveguide used for global addressing.

In this example the source wavelength is 1013nm, but any wavelength may be used provided the components of the hybrid integrated device are designed to operate with such other wavelengths, for example: being transparent for the passive motherboard waveguides; having the correct material energy levels to allow for optical amplification and modulation.

The light output along fibre 244 is input into a wavelength monitoring apparatus (not shown) comprising an external optical resonant cavity. Changes in wavelength of the source 230 are detected by the resonant cavity and an electrical signal output by the apparatus is sent to control electronics which in turn uses the received electrical signal to electrically control the output wavelength of the source to the desired wavelength of operation. This process provides wavelength stabilisation of the source 230. The fibre 246 outputs light to a wavemeter (not shown) for manual monitoring of the source wavelength by a user. Optionally this monitoring channel and its associated motherboard waveguide may not be used.

This example may be adapted with other features discussed in other examples herein including but not limited to: whether the SOA and/or frequency modulator are monolithically or hybrid integrated; the material system and structure of the motherboard waveguides, for example using rib or ridge waveguides; the requirement (or not) for an integrated SOA along a particular channel (for example the SOA may be coupled 'off chip' to the respective output fibres); the source 230 may be integrated monolithically or hybrid integrated onto the motherboard 202; the electrical control assemblies 272a/272b may also be located onto a substrate an integrated onto the motherboard 202.

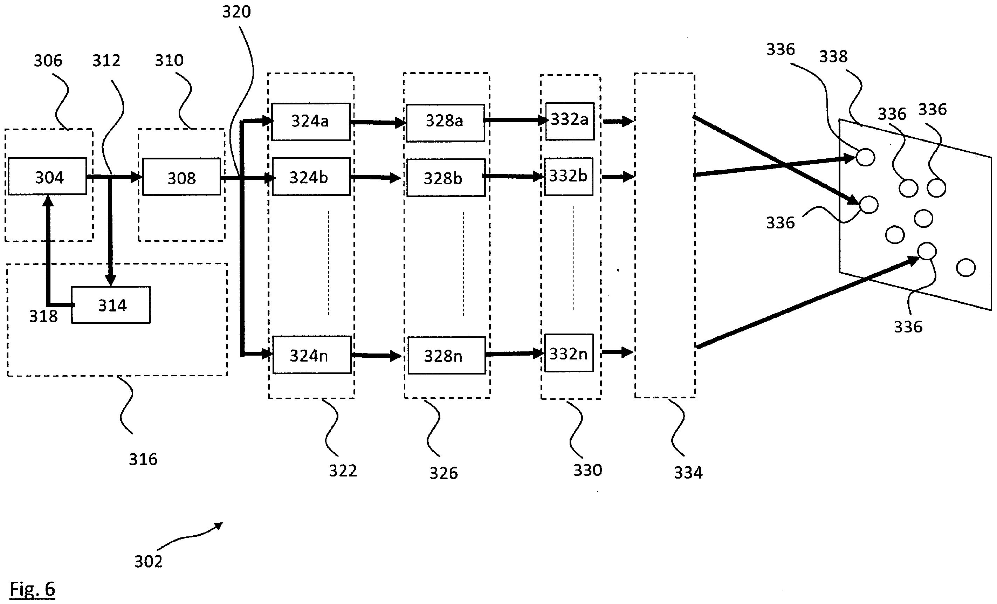

Figure 6 shows a schematic example of a system 300 for providing EM radiation to a plurality of matter particles 336. In this example, the plurality of matter particles are atoms of a neutral atom quantum computer that are for representing qubits in a neutral atom quantum computation, however other matter particles and computations may be used. Reference to electromagnetic, EM, radiation is made throughout this example, and other examples herein. The description also makes reference to 'light' and 'optical', such 'semiconductor Optical Amplifier'. It is to be understood that references to 'light' and 'optical' with respect to describing systems and components are not limited to optical frequencies but may take other wavelengths of operation. Wavelengths generated or used within this disclosure may include, but are not limited to, wavelengths between 300nm - 2000nm, preferably between 400-1200nm.

Figure 6 shows a series of functional blocks. The blocks 306, 316, 310, 322, 326, 330, 334 represent functional units that may be implemented as one or more separate devices. Each functional block may be implemented by one or a plurality of separate devices. Additionally, or alternatively multiple functional blocks may be implemented onto a shared device or set of shared devices. Different functional blocks may comprise different amounts of components. For example, block 322 may comprise ten components 324a-n whilst block 310 may comprise one component.

Entire functional blocks may be integrated onto a shared platform, for example the same chip, as other blocks. For example, all of block 322 may be integrated monolithically or hybrid integrated onto a chip that also integrates block 310. Further blocks may be integrated onto the same platform. The system 300 may have multiple platforms to integrate blocks or components of blocks onto. For example, blocks 306, 310 and 322 may be integrated onto the same platform. A platform is intended to mean a device that accommodates the integrated components, through any integration technique. In other implementations, multiple platforms may be used to integrate a subset of the total number of components of a block. Multiple platforms may each be used to integrate components from multiple blocks. For example: a first platform integrates a first set of one or more components 324a-n of block 322 and a first set of one or more components 328a-n of block 322; whilst a second different platform integrates a second set of one or more components 324a-n of block 322 and a second different set of one or more components 328a-n of block 322.

Optical connections exist between different components of the system, for example, a component of one block may be optically linked to a different component of another block. Where EM radiation is output from one component and input into another component, it is to be assumed an optical 'link' or 'connection' is made between the two components wherein one or more further components may optionally be inserted within the link. Optically linked means that EM radiation output from one component, or block, is input into another component or block. The means to transfer EM radiation between blocks and components may be through using any of: bulk-optic components such as mirrors, lenses; fibre optics such as one or more optical fibres and optionally lenses to couple light to/from components to the optical fibre; integrated optics such as buried channel, rib or ridge waveguides. Integrated-optic waveguides may be implemented into the same platform as chips are integrated upon, as shown in other examples herein. In figure 6, optical connections are shown schematically with thick arrows.

In more detail, figure 6 shows an EM source 304, of a source block 306, that generates and outputs EM radiation to an EM amplifier 308 (for example an optical amplifier) of an amplification block 310. The EM radiation is preferably monochromatic. The EM source may be a laser or LED or other type of source. The laser may comprise a longitudinal Fabry-Perot-type cavity, or a circulating cavity such as a ring resonator or disc resonator. Ring resonators may be desirable because of the small linewidth available.

The EM amplifier may be any form of EM amplifier for amplifying the wavelength of operation, including, but not limited to a fibre-based amplifier such as an EDFA or a semiconductor optical amplifier (SOA). Other types of amplifiers may be used such as a Raman amplifier. An EM amplitude splitter is used to amplitude divide the EM radiation at point 312 such that a first portion is sent to amplifier 308 whilst another portion is sent to an external optical cavity 314 of a wavelength feedback block 316. The amplitude splitting 312 may be accomplished using an amplitude splitter such as an integrated optic Y branch, directional coupler, MMI coupler or fibre-optic splitter. Preferably a larger portion of the EM radiation is directed by the splitting 312 to block 310 than block 316. The cavity 314 is configured to support and (constructively interfere within the cavity) a longitudinal optical mode that corresponds to the desired EM operative wavelength of the EM source 304. EM radiation output by the cavity 314 is fed back 318, via an optical link such as an optical fibre, into the EM source 304 to lock the EM source to the desired wavelength range of operation. Blocks 306 and 310 only show a single component, (304, 308) in each block, however it should be understood that such block may comprise multiple similar components.

EM amplifier 308 receives the EM radiation from the EM source 304, amplifies it, and outputs it to a further amplitude splitter, or set of amplitude splitters (not shown). The further amplitude splitter may be similar to the amplitude splitter previously described. The further amplitude splitter splits 320 the EM radiation into a plurality of portions of the EM radiation. Each portion is input into a different amplitude modulator 324a,b-n of an amplitude modulation block 322. There are 'n' amplitude modulators. Each amplitude modulator 324a-n is used to modulate EM radiation for a different matter particle 336 of the plurality of matter particles forming the qubits for the quantum computation. The amplitude modulators may be any form of amplitude modulator including Mach Zehnder modulators or electro-absorption modulators, or any configuration of amplitude modulator in other examples herein. Each amplitude modulator 324a-n is configured to receive an electrical control signal to amplitude modulate the EM radiation it receives and output amplitude modulated EM radiation towards a corresponding frequency modulator 328a-n of frequency modulation block 326. In other words, the optical output of each of the amplifiers 324a-n is input into a different one of the plurality of frequency modulators 328a-n.

The frequency modulators may comprise any type of frequency modulator including, but not limited to frequency modulators using the acousto-optic effect that doppler shifts the input frequency to a doppler shifted frequency. Other frequency modulators may be used, including waveguides using the electro-optic effect wherein a phase modulation applied to the waveguide (via changing the effective refractive index of the waveguide modes using one or more electrodes) may create sidebands comprising a different frequency to main carrier frequency (hence carrier wavelength). Each frequency modulator may receive a control signal, such as an electrical control signal and change the frequency of the EM radiation from the input first frequency to a second frequency that is different the first frequency. The tuneability of the frequency (hence wavelength) is typically upto +/- 15MHz, preferably upto +/- 20MHz, more preferably upto +/- 50MHz.

The frequency modulator may take a similar form as described in "Pure Single-Sideband Modulation Using High Extinction-Ratio Parallel Mach-Zehnder Modulator with Third-Order Harmonics Superposition Technique" by Yuya Yamaguchi et al., CLEO:2015. Such a frequency modulator uses single sideband (SSB) modulation achieved by a use of dual-parallel Mach Zehnder modulator. In such a device, active Y-branches work as tuneable splitters by Pockels effect. High ER modulation is achievable by controlling the optical power balance of the interferometer with the active Y-branch. The interferometer for this frequency modulator may comprise a main balanced MZI comprising a Y branch waveguide splitter comprising two spatially separate interferometer arm output waveguides. The main MZI also comprises a waveguide Y branch combiner joining two arm waveguides into a single output waveguide. Within each main interferometer arm is a further balanced secondary MZI comprising a Y branch splitter and Y branch combiner similar to that of the main MZI. Each of the Y branch splitters of the main MZI and two MZIs on each respective main arm, are active waveguide components wherein a direct current source is used to apply electrical current to electrodes proximal to the Y branch splitter to control the splitting ratio of output light intensity between each of the output waveguides. Each arm of the two secondary MZIs is phase controlled using electrodes connected to an electrical signal generator wherein the electrical signal applied to the arm electrodes of one of the secondary MZls is 90 degrees out of phase to the electrical signal applied to the arm electrodes of the other of the secondary MZls. The output Y combiner of the main MZI is also an active component.

The amplitude and frequency modulated EM radiation is output from each frequency modulator 328a-n to a different frequency converter 332a-n of a frequency conversion block 330. Preferably each frequency converter 332a-n receives EM radiation from a different frequency modulator such that each one of the frequency modulators 328a-n only outputs radiation for inputting to a different one of the frequency converters. Each frequency converter 332a-n comprises a nonlinear optical element such as, but not limited to, periodically poled Lithium niobate (PPLN). The nonlinear optical element is used to convert at least a portion of the input EM radiation into further EM radiation comprising a wavelength of one of the nonlinear optical susceptibilities of the nonlinear material. Preferably the wavelength corresponds to the second order nonlinear optical susceptibility such that the output newly generated wavelength is frequency doubled, hence the wavelength is halved. The configuration of the frequency converter may be such that the newly generated and original input EM radiation are phase matched as they propagate along the nonlinear element. Examples of components for the frequency converters 332a-n are PPLN waveguides. An optical filter may be used at the output of each frequency converter 332a-n to filter out EM radiation of the input wavelength, but allow to pass onto the matter particle 336 the frequency converted wavelength.

The EM outputs of the block 330 are input into a spatial light modulator block 334 comprising one or more beam steering devices such as an SLM or MEMs micro-mirror array. The spatial light modulator block is configured to direct each of the EM radiation, from each of the frequency converters onto a different matter particle 336. This directing may be done via passing the EM radiation through an optical system (not shown) that comprises one or more lenses and/or mirrors for focussing the EM radiation. Preferably the SLM 334 and optical system are designed and arranged to focus the EM radiation output from each frequency converter 332a-n, as a separate beam with a beam waist at the location of the matter particle 336. In figure 6, each spatially separated matter particle 336 acting as a qubit is located on a common 2D plane 338, however the matter particles 336 may be arranged in any 1D, 2D or 3D pattern.

The EM radiation for each matter particle 336, and its respective path through different blocks, may be referred to as a 'channel'. For example, a channel may comprise the EM radiation output from the split 320 that passes through each of blocks 322, 326, 330, 334 and onto a particular matter particle 336. The components of each channel, for each block, may be different, for example, one matter particle may use EM radiation passing through and generated by components 324b, 328b, 332b, 334.

The system 302 has several potential advantages. Firstly, by integrating one or more, or at least two or more of the components from two or more of the blocks onto a single device, the EM radiation generation system may be more compact than other prior apparatus used to generate EM radiation for quantum computers. This advantage becomes more applicable when many components are integrated onto the same device. For instance, all the EM components for the source block 306, amplification block 310 and amplitude modulation block 320 may be hybrid integrated onto a common chip. The common chip may have integrated within it, or upon it, planar Lightwave circuit elements such as one or more waveguide splitters for splitting 312 and 320. Secondly, each matter particle 336 may be input with EM radiation that can have its EM properties (such as amplitude and frequency) independently controlled compared to other matter particles. This is accomplished at least in part by having different independently controllable channels.

Thirdly, certain EM wavelengths required for operating the quantum computer are difficult to generate, amplify and modulate. By generating the EM radiation using an EM source 304 of a first wavelength and then frequency converting it to a second different wavelength, the system 302 can perform the required EM modulation at one wavelength but then, before being output to the matter particle, be frequency converted to the required wavelength. An example of this is for a neutral atom quantum computer using Rubidium atoms wherein a qubit-atom is transitioned from a ground state to a Rydberg state using a two-photon absorption process of a photon at 420nm and a photon at 1013nm. EM radiation at a wavelengths of 420nm may be difficult to generate, amplify and modulate compared to other wavelengths. By generating EM radiation at the EM source 304 at 840nm, and then amplifying and modulating the EM radiation at the same wavelength, components for manipulating EM radiation at 840nm can be used. Such components are typically more readily available than those for 420nm. Using second harmonic generation at each frequency converter 332a-n to generate new 420nm light and filtering out unconverted 840nm light, leads to amplitude and frequency modulated EM radiation at 420nm being input to each qubit-atom. The magnitude of the frequency modulation and frequency conversion, at blocks 326 and 330, is different. Typically, the frequency modulation block 326 is changing the carrier frequency (hence carrier wavelength) by an amount comparable typically to upto 10 or a few 10's of MHz, whereas the frequency converter changes the frequency by doubling (or tripling it for the third order susceptibility).

The ability to frequency modulate (hence wavelength modulate) each channel by a small amount is advantageous if the quantum computation requires detuning of at least one of the wavelengths used in the quantum computation. For example, Rubidium atoms in a neutral atom quantum computer may be all be (globally) provided with 1013nm EM radiation of the same amplitude, and use further EM radiation of 420nm to transition from a ground state to a Rydberg state. The system of figure 6 may be used to individually control the precise amplitude and wavelength of the ~420nm radiation input into each qubit atom. This in turn allows for individual control of any particular qubit-atoms' ability to transition to the Rydberg energy level. For instance, if one atom is required to have a less favourable chance to transition to the Rydberg energy level, then the amplitude of the 420nm radiation input for that atom may be reduced and/or the wavelength detuned so the two-photon transition for that atom is off-resonance. It should be noted that the independent control of at least one EM radiation input into a qubit atom may apply to any EM radiation used in the quantum computation. This may include the radiation used to trap the atoms as discussed with respect to figure 4.

An example implementation of the scheme of figure 6 is now described. The source block comprises a single 840nm wavelength O-band ring resonator laser source. Such a source may be a source similar to that proposed by N. A. Schilder et al., "850 nm hybrid-integrated tuneable laser with Si₃N₄ micro-ring resonator feedback circuits" OFC(2022), which outputs laser light at 850nm with a ~50nm wavelength tuning range and an intrinsic linewidth of smaller than 600Hz. The output EM radiation is ~ 11mW of optical power is output into an optical fibre connected to a one-input port, two-output port optical fibre splitter that outputs and guides 1mW of the output optical power to the external cavity 314 via a first output fibre whilst the remaining 10mW is guided by a second output optical fibre to a polarisation insensitive SOA operating with a peak gain at 840nm.

The optical cavity 314 is a ~20cm long Fabry Perot cavity comprising a vacuum cavity in between two opposing 99.99% reflectivity mirrors at 840nm. Other cavities may be used such as an etalon Fabry-Perot (i.e. a one block Fabry-Perot). A collimation system is used to receive EM radiation output from the first output fibre and collimate the EM radiation into a collimated beam for input into the Fabry-Perot cavity. EM radiation output from the cavity is output back into the first output optical fibre, back through the fibre splitter and back into the ring resonator source 304. This allows the system to lock the wavelength of the EM source using the Pound-Drever-Hall scheme. The same external cavity may be used for other examples herein including that of figure 5a.

The SOA of the amplifier block 310 is hybrid integrated onto a silicon nitride waveguide PLC platform that further hybrid integrates two hundred lithium niobate MZI modulators similar to those described for figure 2b. Each of the MZI's act as one of the amplitude modulators 324a and is independently controllable to modify the amplitude of the EM radiation in the channel for one of the qubit-atoms. The silicon nitride - based platform may be similar to that shown in other examples herein, wherein here, the two hundred waveguides required for carrying EM radiation to the two hundred MZI's are formed using silicon nitride core waveguide splitters, for example a concatenation of 1x2 or 1xN optically coupled splitters that effectively, as a group of splitters, have one input and 200 spatially separated output waveguides.

The above implementation of the system 302 may be adapted to comprise a plurality of separate chip platforms, each chip platform comprising integrated-optic splitters and a plurality of MZls. For example, optical fibre splitters may be used to split the EM radiation output from SOA 308 into ten output optical fibres, each carrying approximately a 10^{th} of the input EM radiation. Each of these output optical fibres then input its EM radiation into a different one often similar chips. Each chip has twenty MZls integrated onto the chip and optionally integrates a further SOA similar to the SOA of the amplification block 310, that is used to amplify the input EM radiation before further subdividing the EM radiation into twenty spatially separate waveguides using waveguide splitters such as MMI's or Y branches. Each of the twenty output waveguides carries a similar level of optical power.

The EM outputs of the one or more chips with the integrated MZls is output into a different optical fibre that inputs its channel EM radiation into one of two hundred acousto-optic modulators for changing the frequency of the EM radiation of each channel. The doppler shift from the acousto-optic effect shifts the frequency (hence wavelength) by 100MHz and then is tuneable to be a further +/-15MHz. Other frequency modulator types may be used including integrated optic devices that may optionally be integrated onto the chips carrying the MZls. The output of each frequency modulator is input into one of two hundred PPLN waveguides acting as the frequency converters of the frequency conversion block 330. Each PPLN waveguide is phase matched to frequency double the input EM radiation of central wavelength 840nm to ~ 420nm. Ther input EM radiation into each PPLN waveguide is around 500 micro-Watts. The output EM radiation at 420nm, for each frequency converter is ~ 5 micro-Watts.

Each of the outputs of frequency converters is collected by a separate multimode optical fibre of a 200 fibre bundle that carries the EM radiation, one optical fibre per channel, to a 200 micromirror array MEMs that controls the direction along which each channels EM radiation is directed.

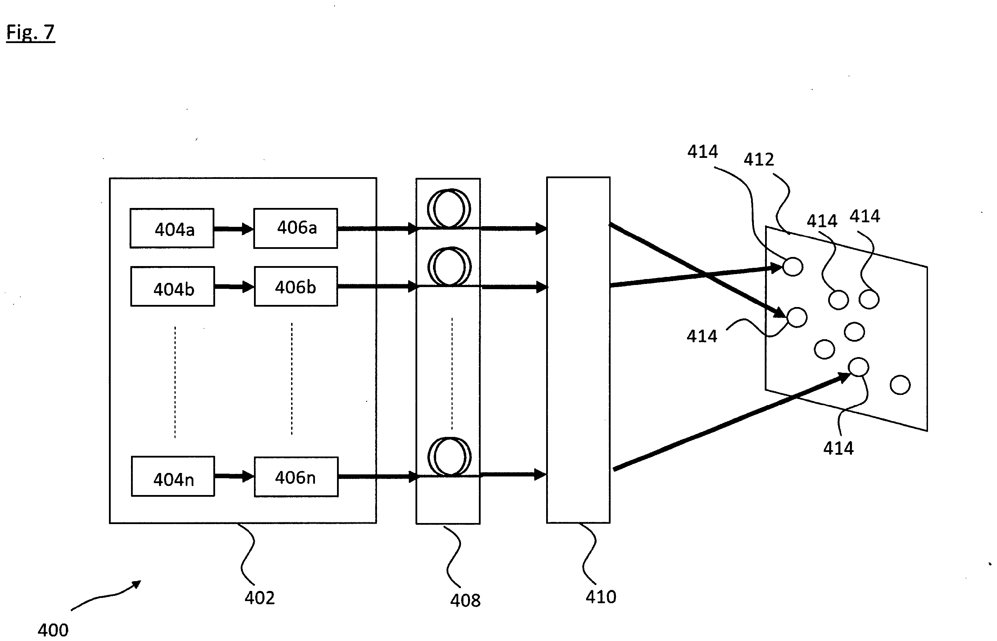

Figure 7 shows a schematic example of a system 400 for providing EM radiation to a plurality of matter particles. In this example the plurality of matter particles are atoms of a neutral atom quantum computer that are for representing qubits in a neutral atom quantum computation. A first chip 402 comprises a plurality of 'n' EM sources 404a, 404b-404n. The EM sources 404a-n may comprise any number of sources such as 10 or 100 sources. The wavelength of the sources 404a-n may be a wavelength in the infrared or visible spectrum or any other wavelength required for either trapping matter particles or providing EM radiation to the matter particles for the quantum computation. The EM radiation require for the computation may be used to transition the matter particles to a higher energy state such as a Rydberg state. Additionally, or alternatively, the EM radiation may be used to prevent matter particles transitioning to a higher energy state when simultaneously input with other EM radiation. The EM sources 404a-n each generate separate EM radiation and output that radiation to a different one of a set of 'n' amplitude modulators 406a, 406b-406n. The amplitude modulated EM radiation output from the modulators 406a-n is then output from the chip 402 into an array of optical fibres 408. The EM radiation output from each modulator 406a-n is output from a spatial separate output edge facet of the chip 402 and input into a different optical fibre of the optical fibre array 408. The optical fibre array 408 guides the EM radiation to a spatial light modulator (SLM) 410 that receives the EM radiation output from each optical fibre in the array 408. The SLM 410 controllably diverts each EM radiation to a separate matter particle 414. In the figure, each matter particle 414 lies along a common plane 412. The example of figure 7 therefore enables EM radiation to be provided to qubit-matter particles of a quantum computer in a compact manner by having a plurality of the EM generation and modulation components on a common device. The common device may also comprise a set of predefined electronic contacts that may also be localised at one or more locations on the chip 402, thus making the set-up of the quantum computation more simple.

A more detailed example implementation of this example is a system 400 for providing EM radiation to a plurality of Rubidium-87 atoms 414 of a neutral atom quantum computer. The chip 402 comprising a silicon substrate, a doped silicon dioxide undercladding layer of a first refractive index residing upon the silicon substrate. A further doped silicon dioxide layer, comprising a higher refractive index than the undercladding layer, is deposited and etched to form core waveguide patterns of a PLC upon the undercladding layer. An overcladding layer of polymer is spun-coated on top of the core and undercladding materials to bury the core waveguides to form buried channel integrated optic waveguides. The polymer comprises a lower refractive index compared to the core waveguide. Preferably the undercladding and overcladding materials comprise a similar refractive index at the wavelength of operation of the system 400. Other materials may be used for the chip including silicon nitride or any other material described in other examples herein.

The chip 402 is used as a platform to hybrid integrate further chips onto, for example using any of the integrated techniques and features described in other examples herein. The EM sources 404a-404n in this implementation are laser diodes outputting EM radiation at a central wavelength of 1013nm. Each EM sources 404a-n is a separate chip that is integrated onto the main chip 402. Each EM amplitude modulator 406a-406n in this implementation is Mach-Zehnder modulator (MZM) that may be similar to other MZMs described herein. Each MZM 406a-n is a separate chip that is integrated onto the main chip 402. The array of optical fibres 408 comprises a bundle of single mode (at 1013nm) optical fibres that guide light onto a Micro-Electro-Mechanical system (MEMS) comprising a plurality of individually controllable micro-mirrors that can be independently controlled to change the mirror angle to direct EM radiation along a direction toward the desired atom position.

Several other technical elements are not shown in the figure including, but not limited to: a classical electronic computer for determining the atom positions and properties of the EM radiation; electronic controllers for outputting electronic control signals to any of the laser diodes; modulators; and SLM; an optical imaging system for focussing the 1013nm EM radiation onto the qubits; a vacuum chamber for accommodating the atoms 414; other EM radiation generation, modulation and focussing components for providing EM radiation to the atoms 414; other components required for the quantum computer.

The above system 402 may be adapted with other configurations or teaching herein including but not limited to: the EM source used, the modulators used, the number of chips 402 used. For example, multiple (similar) chips 402 may be used to input EM radiation into the same optical fibre array. A chip 402 may be difficult to form in large format and therefore several smaller chips 402 may be simpler to produce.

## Claims

1. A system for outputting a plurality of electromagnetic, EM, radiation beams; at least two of the EM radiation beams for interacting with a respective different atom of a plurality of atoms of neutral atom quantum computer; the plurality of atoms for defining a respective plurality of qubits in a quantum computation performed by the neutral atom quantum computer;
the system comprising:
I) a plurality of integrated-optic EM radiation sources wherein at least a first and a second of the plurality of integrated-optic EM radiation sources are for generating respective first and second EM radiation and outputting said EM radiation along respective spatially separate output paths;
II) a plurality of integrated-optic EM modulator apparatus wherein;
at least a first of the integrated-optic EM modulator apparatus is for receiving the first EM radiation;
at least a second of the integrated-optic EM modulator apparatus is for receiving the second EM radiation;
III) a plurality of output couplers; each output coupler for:
A) receiving, via an integrated-optic waveguide, EM radiation output from at least one of the integrated-optic modulator apparatus; the integrated optic waveguide for guiding EM radiation about a plane;
B) outputting the received EM radiation as an EM radiation beam in a direction out of the plane;
wherein:
a first output coupler receives the first EM radiation;
a second output coupler, spatial separated from the first output coupler, receives the second EM radiation.

2. A system as claimed in claim 1 wherein the EM radiation beam comprises an energy that is non resonant with energy level transitions of the atoms.

3. A system as claimed in claim 1 wherein each of the EM radiation beams comprises a central wavelength between 800nm and 860nm.

4. A system as claimed in claims 1 or 2 wherein the EM radiation beams comprises a central wavelength of any of 815nm or 850nm.

5. A system as claimed in any preceding claim wherein one or more of the EM radiation sources emit EM radiation of the same central wavelength.

6. A system as claimed in any preceding claim wherein a plurality of the EM radiation sources form at least part of a common device.

7. A system as claimed in any preceding claim further comprising one or more further EM sources for outputting further EM radiation for interacting with the atoms.

8. A system as claimed in claim 7 wherein the further EM radiation comprises a central wavelength different than a central wavelength of the EM radiation beams.

9. A system as claimed in claim 8 wherein the further EM sources comprise at least:
a) a first set of one or more further EM radiation sources for outputting a first further central wavelength;
b) a second set of one or more further EM radiation sources for outputting a second further central wavelength; the first further central wavelength being different than the second further central wavelength.

10. A system as claimed in claim 9 wherein the combined energy from:
a) a photon output from the further EM source from the first set: and,
b) a photon output from the further EM source from the second set;
corresponds to an energy level transition of an atom of the plurality of atoms.

11. A system as claimed in any preceding claim and configured to generate an optical trap with the EM radiation from at least one of the EM radiation beams.

12. A system as claimed in any preceding claim wherein the EM radiation from at least one of the EM radiation beams reduces a ground state energy level of the respective atom.

13. A system as claimed in claim 12 wherein the reduction of the ground state energy level acts to prevent a transition between the ground state energy and a higher energy state using EM radiation from one or more of the first and/or second sets of further EM radiation sources.

14. A method for outputting a plurality of electromagnetic, EM, radiation beams; at least two of the EM radiation beams for interacting with a respective different atom of a plurality of atoms of neutral atom quantum computer; the plurality of atoms for defining a respective plurality of qubits in a quantum computation performed by the neutral atom quantum computer;
the method comprising:
A) in any order or simultaneously:
generating first EM radiation using a first integrated-optic EM radiation source and outputting the first EM radiation along a first output path;
generating second EM radiation using a second integrated-optic EM radiation source and outputting the second EM radiation along a second output path that is spatially separate from the first output path;
B) in any order or simultaneously:
modulating the first EM radiation using a first integrated optic EM modulator;
modulating the second EM radiation using a second integrated optic EM modulator;
C) in any order or simultaneously:
iii) receiving, along a plane, with a first output coupler, the modulated first EM radiation and outputting the modulated EM radiation in a direction out of the plane as a first EM radiation beam;
iv) receiving, along a plane, with a second output coupler, the modulated second EM radiation and outputting the modulated EM radiation in a direction out of the plane as a second EM radiation beam;

15. A method as claimed in claim 14 further comprising:
inputting the first EM radiation beam to a first of the atoms;
inputting the second EM radiation beam to a second of the atoms; the first atom and second atom being spatially separated from each other.
